# EUROPEAN PATENT APPLICATION

(11) **EP 3 296 028 A1**
(43) Date of publication of application: **21.03.2018**
(21) Application number: 16189004.1
(22) Date of filing: 15.09.2016
(51) Int. Cl.: B06B 1/02, G01H 9/00, G10K 15/04

(54) **TRANSDUCER FOR ELECTROMAGNETIC AND THERMO-ACOUSTIC WAVE BASED ON THREE DIMENSIONAL GRAPHENE STRUCTURE**

(71) Applicant: PAUL SCHERRER INSTITUT, 5232 Villigen PSI (CH); Sapienza University of Rome, 00185 Roma (IT)
(72) Inventor: GIORGIANNI, Flavio, 00118 Rom (IT); HAURI, Christoph Peter, 5502 Hunzenschwil (CH); LUPI, Stefano, 00135 Rom (IT); SHALABY, Mostafa, 8052 Zürich (CH); VICARIO, Carlo, 5303 Würenligen (CH)
(74) Representative: Fischer, Michael

(57) **Abstract**

The present invention discloses a method and an apparatus for converting incident electromagnetic radiation into acoustic and/or ultrasonic waves, comprising:
a) a 3D graphene structure comprising a number of graphene sheets for receiving the incident electromagnetic radiation and responding to the incident electromagnetic radiation by an acoustic and/or ultrasonic signal;
b) an electro-acoustic transducer being coupled to the graphene sponge and receiving the acoustic and/or ultrasonic signal and outputting in response to the acoustic and/or ultrasonic signal an electric signal; and
c) an evaluation unit being enable to detect the course of the intensity of the electric signal.

It further discloses a method and an apparatus for converting incident acoustic and/or ultrasonic waves into electromagnetic radiation, comprising:
a) a 3D graphene structure comprising a number of graphene sheets for receiving the incident acoustic and/or ultrasonic waves and responding to the incident acoustic and/or ultrasonic waves by electromagnetic radiation; and
b) an electro-acoustic transducer being coupled to the 3D graphene structure outputting the acoustic and/or ultrasonic waves.

The present invention allows simple, efficient and prompt conversion of high frequency electromagnetic radiation, in the range between MHz and 100 THz, into acoustic waves at frequencies between few Hz to more than 100 kHz and possibly vice versa.

## Description

The present invention relates to an apparatus and a method for converting incident electromagnetic radiation into acoustic and/or ultrasonic waves and to an apparatus and a method for converting incident acoustic and/or ultrasonic waves into electromagnetic radiation.

Numerous devices are employed to detect/emit high frequency electromagnetic radiation between microwaves, terahertz (THz) and optical region. These sensors are characterized by very selective spectral sensitivity. For example, THz detectors are based on various typology of opto-electronic or thermoelectric mechanisms in cryogenic micro-bolometer or electro-optical devices. THz sources are realized with nonlinear and photoconductive processes driven by high intensity laser or using relativistic ultrashort electron beams. Microwaves are usually generated and detected with complex and frequency selective high frequency electronics.

It is therefore an objective of the present invention to provide an apparatus and a method for the conversion of high frequency electromagnetic radiation over an extremely wide bandwidth into a signal in response to the electromagnetic radiation that can be easily detected and evaluated.

With respect to the apparatus, this objective is achieved according to the present invention by converting incident electromagnetic radiation into acoustic and/or ultrasonic waves, comprising:
a) a 3D graphene structure comprising a number of graphene sheets for receiving the incident electromagnetic radiation and responding to the incident electromagnetic radiation by an acoustic and/or ultrasonic signal;
b) an electro-acoustic transducer being coupled to the graphene sponge and receiving the acoustic and/or ultrasonic signal and outputting in response to the acoustic and/or ultrasonic signal an electric signal; and
c) an evaluation unit being enable to detect the course of the intensity of the electric signal.

With respect to the method, this objective is achieved according to the present invention by converting incident electromagnetic radiation into acoustic and/or ultrasonic waves, said method comprising the steps of:
a) providing a 3D graphene structure comprising a number of graphene sheets for receiving the incident electromagnetic radiation and responding to the incident electromagnetic radiation by an acoustic and/or ultrasonic signal;
b) providing an electro-acoustic transducer being coupled to the 3D graphene structure and receiving the acoustic and/or ultrasonic signal and outputting in response to the acoustic and/or ultrasonic signal an electric signal;
c) providing an evaluation unit being enable to detect the course of the intensity of the electric signal; and
d) irradiating the 3D graphene structure with the electromagnetic radiation.

Of course, it could be desirable to use the apparatus and the method the opposite way around in order convert an acoustic and/or ultrasonic signal into electromagnetic radiation.

With respect to the apparatus, this objective is achieved according to the present invention by an apparatus for converting incident acoustic and/or ultrasonic waves into electromagnetic radiation, comprising:
a) a 3D graphene structure comprising a number of graphene cells for receiving the incident acoustic and/or ultrasonic waves and responding to the incident acoustic and/or ultrasonic waves by electromagnetic radiation; and
b) an electro-acoustic transducer being coupled to the 3D graphene structure outputting the acoustic and/or ultrasonic waves.

With respect to the method, this objective is achieved according to the present invention by a method for converting incident acoustic and/or ultrasonic waves into electromagnetic radiation, comprising:
a) providing a 3D graphene structure comprising a number of graphene sheets for receiving the incident acoustic and/or ultrasonic waves and responding to the incident acoustic and/or ultrasonic waves by electromagnetic radiation; and
b) providing an electro-acoustic transducer being coupled to the 3D graphene structure outputting the acoustic and/or ultrasonic waves; and
c) irradiating the 3D graphene structure with the acoustic and/or ultrasonic waves.

Hence, the present invention presents an innovative approach based on a 3D graphene structure (also exemplarily referred to as graphene sponge) for the conversion/detection of high frequency electromagnetic radiation over an extremely wide bandwidth. A 3D graphene structure is one of the lightest materials on earth consisting of a three-dimensional macro-porous structure with randomly oriented and highly interconnected graphene-based sheets. The 3D graphene structures have density similar to air and so far have never been investigated for detection of electromagnetic wave, which is the topic of the present invention.

The spectral sensitivity of the apparatus and the method extends from the microwaves (hundreds of MHz) to terahertz, near infra-red, and visible light (hundreds of THz). The output frequency is in the acoustic and ultrasonic range. The transduction effect is associated to a rapid and local variation of temperature of air and then to the formation of a pressure wave at the graphene-sponge/air interface. Using the apparatus and the method allow for spectral conversion from electromagnetic into acoustic waves that can be either heard or detected in simple electronic receivers. It was found that the referred acoustic and thermal response depends linearly on the intensity of the electromagnetic radiation. This means that both narrow and broadband incident electromagnetic radiation show similar transduction effects and can be detected. Moreover, the response can be applied to other parts of the electromagnetic spectrum where similar behavior is foreseen.

In addition to the dominant spectrally-insensitive, power-linear dependence, a slight change in the spectral shape and bandwidth with the temporal structure and amplitude modulation of the electromagnetic wave is observed. Such observation can be engineered to code/modulate electromagnetic signal and thus may find large scale of applications in communication/information technology for information modulation/demodulation from high to audio frequency. For example, heterodyning is a common communication process used in shifting the frequency by means of summing and subtracting two source frequencies. As the graphene sponge has universal absorption and sound generation properties, it may be used as a medium for frequency mixing and demodulation of signal to low frequency extending to communication bands which are hard to cover by common electronic devices. The extremely light weight and possible integration other graphene-based electronics, will have a strong advantage in communication and acoustic devices.

The present invention can be further applied to any use that involves detection and possibly generation of electromagnetic radiation over a broad spectrum. Examples include detection cards for invisible radiation, such as terahertz and microwave, detection of hazardous radiation for human beings and animals, wireless communication.

In particular, the present invention can be used for radiation control in the detection and elimination of hazardous radiation. The present invention can be also used for example in the environment of video/tone spectacles. Graphene-covered walls can be engineered for next generation audio-visual effects (for example, in theaters) by shining light on graphene. The graphene sponge can be used as a wireless and high fidelity loudspeaker for acoustic and ultrasound frequencies driven by modulated microwave, THz and light sources, like commercial LEDs. This device can be also powered by modulated solar light without use of external power supply.

As the underlying physical effect is likely connected to other physical variables, such as temperature, pressure, volume and elasticity, etc., other degrees of controls can be obtained using these variables. As an example, the spectral sensitivity in the high frequency and acoustic wave can be shaped for specific applications. Thereby, the spectral sensitivity can be tailored covering the graphene sponge with spectral selective filter on the input side.

Further application of the invention can be an ultra-compact THz detector for material spectroscopy and homeland security.

Another application could be a high frequency microwaves (MHz and GHz) diode which allows linear detection of the microwave power.

The apparatus can be further used for high frequency metrology to measure (calibrate) the frequency offset of one source with respect to a reference electromagnetic generator.

In an alternative use case, the present invention may be used for fast and low consuming heating controlled by high frequency electromagnetic radiation. The radiation-induced heating and high broadband absorption of the material may find applications in controlling the atmosphere temperature, air conditioning, and environment protection.

Preferred embodiments of the present invention are hereinafter described in more detail with reference to the attached drawings which depict in:

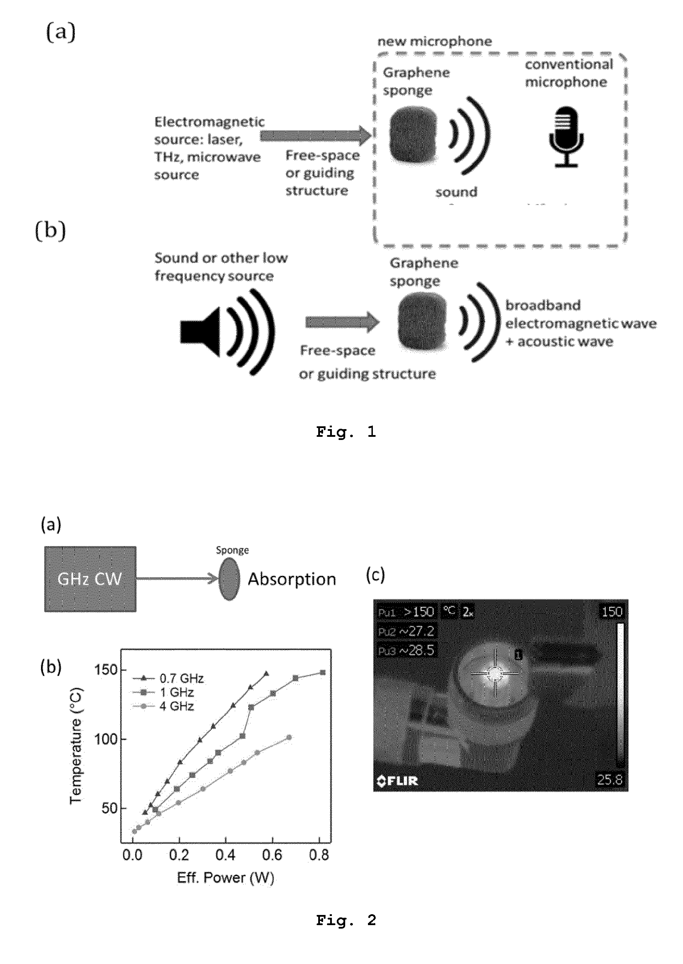

- Figure 1: schematically a layout of the principle of operation of an electromagnetic transducer based on the conversion of electromagnetic radiation into sound (a) and vice versa (b);
- Figure 2: (a) schematically a diagram of the measurement setup of the CW microwave heating effect on the graphene sponge at different frequencies; (b) the measured graphene sponge temperature for different incident CW microwave effective power levels; and (c) a recorded image with a thermal camera of the exposed sample to microwave.

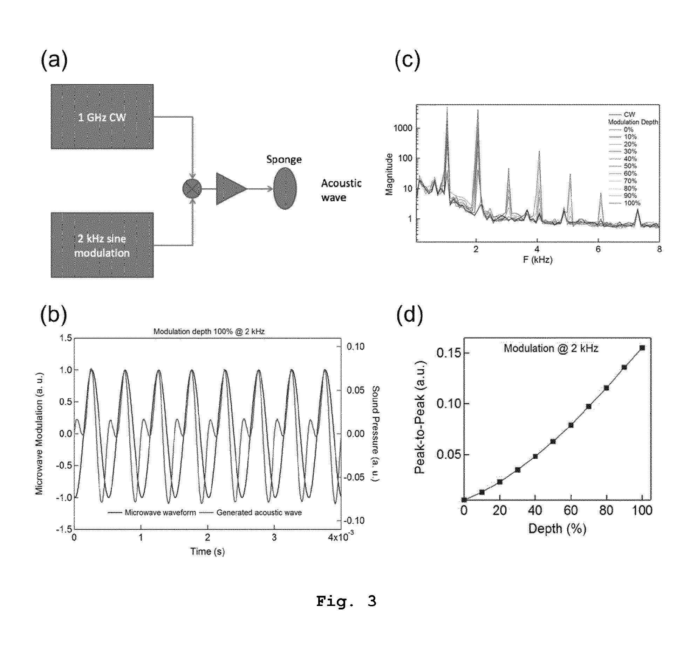

- Figure 3: (a) schematically a diagram of the measurement setup of a modulated microwave signal; (b) the measured sound along with the modulation frequency; (c) the measured sound for different modulation depths; and (d) the dependence of the peak-to-peak sound signal on the modulation depth.

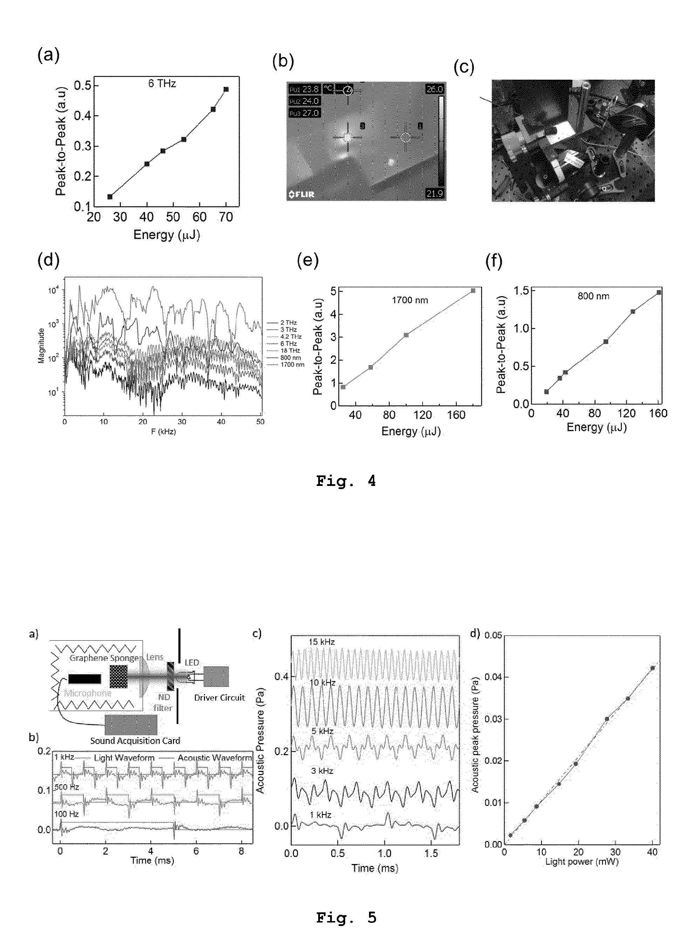

- Figure 4: (a) the dependence of the measured sound signal peak to peak (pp) on the THz pulse energy measured using a 6 THz low pass filter LPF; (b) the recorded thermal image of the sample when exposed to THz; (c) the corresponding optical image; (d) The corresponding sound spectra under illumination with THz, and optical beams; (e) and (f) are similar to (a) except that the stimulus was laser pulses at wavelength of 1700 nm and 800 nm, respectively; and
- Figure 5: (a) schematically a measurement setup of THz sound generator using a modulated white light LED; (b) the waveforms of both the modulated light the generated acoustic signal; (c) the dependence of the acoustic pressure on the modulation frequency; and (d) the dependence of the acoustic sound pressure on the light power at 1 kHz repetition rate.

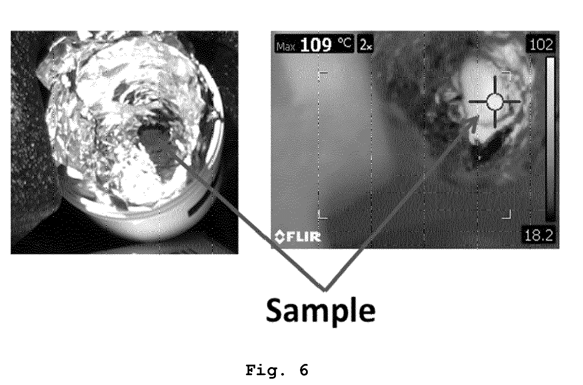

- Figure 6: measurement of the temperature of the sample when exposed to sunlight; left image is a photographic picture of the sample placed on an aluminum foil; right image is a thermal image of the sample exposed to natural sunlight.

Figure 1 schematically shows a layout of the principle of operation of an electromagnetic transducer/detector based on electromagnetic conversion in sound (a). The reverse function is shown in (b) where a sound or low frequency source is used to produce broadband electromagnetic waves and/or sound at higher frequencies. In case (b) the graphene sponge acts as a broadband frequency-up converter.

Figure 1 shows the principles of the present invention. In (a), the incident electromagnetic radiation on a graphene sponge induces a local rapid variation of temperature with consequent emission of sound waves with frequencies from acoustic to ultrasound. The graphene / graphene oxide sponge can be integrated directly in a device as a microphone / loudspeaker with the proper audio amplification.

A possible explanation of the fundamental physical mechanism of the presented graphene sponge transducer is based on the capability of graphene to absorb electromagnetic waves over large spectral bandwidth. Having low specific heat and high thermal coefficient of volume contraction paired to super compressive elasticity, incident electromagnetic radiation leads to high amplitude pressure waves. The latter is likely responsible for the generated sound waves.

Figure 2a) shows schematically a diagram of the measurement setup of the CW microwave heating effect on a graphene sponge at different frequencies; Figure 2b) shows the measured graphene sponge temperature for different incident CW microwave effective power levels and (c) a recorded image with a thermal camera of the exposed graphene sponge sample. Pu1 denotes the temperature of the illuminated part of the sponge (cross). Pu2 and Pu3 are two background points.

The response of the graphene sponge to the microwave radiation has been studied first. Fig. 2a) shows a schematic diagram of the measurement scheme. The rise in temperature of the graphene sponge was measured using an IR camera for continuous wave (CW) radiation at 0.7 GHz, 1 GHz, and 4 GHz. The temperature rise is found to be linear with the incident power and is enhanced as the frequency decreases (for a given power level). This behavior could be a potential benefit to develop a thermal sensor of electromagnetic radiation. The maximum recorded temperature was 150 °C (Fig. 2c) and the minimum effective power was 1 mW, limited by our camera's temperature operation range, and sensitivity. In the experiments, graphene sponge samples were used with different size from few mm3 to cm3 (max. 7x17x17 mm³ = 2.023 cm³). Experiments have also been performed with compressed graphene sponges thereby varying the density between 0.92 and 9.2 mg/cm3.

In the above measurements, during the constant temperature steady state, no sound generation was observed in the acoustic and ultrasound ranges. Sound is produced for a temporal modulated electromagnetic radiation which leads to a thermal wave in the graphene sponge. Such thermal gradient modifies the pressure in the surrounding air leading to the generation of sound waves.

To deeply look at that, a more complex measurement setup has been adopted as shown in Fig. 3a) where the CW microwave source is modulated using a 2 kHz sinusoidal wave. In this case, a sound from the graphene sponge was observed. The measured sound pressure is shown against the modulation voltage in Fig. 3b. The sound pressure shows superimposed two signals corresponding to the positive and negative gradients of the microwave signal. The corresponding spectrum is shown in Fig. 3c for modulation depths in the range of 0% to 100%. As expected the sound signal intensity increases with the modulation depth nearly vanishing for a CW source. The relationship between the modulation depth and the peak-to-peak sound signal is linear as shown in Fig. 3d.

Then, the measurement was extended to the terahertz range. A broadband terahertz source as described in ref. [5] was used. The source is based on organic crystal DSTMS and has main spectral contents in the 1-5 THz. The maximum output energy was 70 µJ and the repetition rate was 100 Hz. In order to eliminate any high frequency components, a 6 THz low-pass filter (LPF) was placed after the crystal. Similar to the microwave measurements, a linear dependence (Fig. 4a) of the sound signal amplitude on the THz pulse energy has been observed. Apart from the three orders of magnitude difference in frequency, the THz source is pulsed at low repetition rate (100 Hz) in comparison with the modulated CW microwave source. The recorded thermal image is shown in Fig. 4b where the average temperature rise was 3.1 °C with respect to the background. The corresponding optical image is shown in Fig. 4c. The maximum rise in temperature was expected to be orders of magnitude higher because the camera records the time average of our short (sub-picoseconds) pulse effect at a laser repetition rate of only 100 Hz. The recorded sound spectra using different THz LPF (2, 3, 4.2, 6) was measured and are shown in Fig. 4d. The spectrum extends beyond the audio sound range into the ultrasonic one limited by the present microphone detection range (50 kHz).

Figure 4a) shows the dependence of the measured sound signal pp (peak to peak) on the THz pulse energy measured using a 6 THz LPF. Figure 4(b) illustrates the recorded thermal image of the sample when exposed to THz; Figure 4(c) is the corresponding optical image. Figure 4(d) depicts the corresponding sound spectra under illumination with THz, and optical beams. Figures 4(e) and 4(f) are similar to Figure 4(a) except that the stimulus was 1700 nm and 800 nm pulses, respectively.

The measurement has been extended to the optical regime. Pulsed laser sources (100 Hz repetition rate) were used with a center wavelength of 1700 nm (pulse duration: 70 fs) and 800 nm (pulse duration: 50 fs). Similar behavior to the low frequency measurements has been observed. The measured sound intensities are shown in Fig. 4d) and 4e) to increase linearly with the incident pulse energies. The corresponding sound spectra are shown in Fig. 4c).

The graphene sponge transducer/detector can be used to detect an extremely broad portion of the electromagnetic spectrum spanning from high frequency radio and micrometer waves to terahertz frequencies up to the visible range. In order to demonstrate the versatility of the present invention towards industry and production, the teaching has been applied to a commercial white light LED. In Fig. 5a, a simple circuit is shown where white light from a LED is focused using a lens on the graphene sponge and the generated sound is recorded. In Fig. 5b the emitted acoustic waveform versus the modulated light waveform is shown. As shown above, the sound occurs at the transient of the light pulse (rise and fall edges). As the modulation frequency increases, the rise and fall pulses overlap becoming indistinguishable around 10 kHz. In Fig. 5d, the acoustic peak pressure is shown as a function of the light power at 1 kHz repetition rate for the graphene sponge. This configuration permits to realize wireless high-fidelity loudspeaker driven by properly temporal modulated light signal.

Figure 5a) shows schematically the measurement setup of THz sound generator using a modulated white light LED. Figure 5(b) shows the waveforms of both the modulated light and the generated acoustic signal. Figure 5(c) represents the dependence of the acoustic pressure on the modulation frequency and Figures 5(d) the dependence of the acoustic sound pressure on the light power at 1 kHz repetition rate.

Figure 6 demonstrate that when the sample is exposed to sunlight without any solar concentrating system, it heats up efficiently and reaches temperature beyond 100 degrees Celsius.

It has to be noted that while the electromagnetic broad band detection through sound generation is a universal phenomenon in graphene sponge, the physical mechanism of absorption is different for microwave-THz and infrared-visible ranges.

The present invention therefore paths a way of the use of graphene sponge as transducer (sensor, loudspeaker, electromagnetic emitter and modulator) from electromagnetic radiation to sound waves and *vice versa* operating in an ultra-wide range for both electromagnetic and sound frequencies.

### References

### Patent prior art

1. KR101058475B, Mems Microphone Based on graphene membrane and fabrication method therefor.
2. CN105067160, A Oxidized graphene sponge-based flexible pressure sensor and manufacturing method thereof.
3. CN103663414, A Preparation method of graphene sponge
4. WO2014028978 A1, Graphene-based materials.

### Non-patent literature

[1] Y. Wu et al, Nat. Commun. 6, 7141 (2015).
[2] J. Zhao, W. Ren, and H. -M. Cheng, J. Mater. Chem., 22, 20197 (2012).
[3] Y Wang, X. Wu, and W. Zhang, Mat. Lett. 165, 71 (2016).
[4] T. Zhang et al, Nature Photonics 9, 471 (2015).
[5] M. Shalaby and C. P. Hauri, Nat. Commun. 6, 8439 (2015).

## Claims

1. An apparatus for converting incident electromagnetic radiation into acoustic and/or ultrasonic waves, comprising:
a) a 3D graphene structure comprising a number of graphene sheets for receiving the incident electromagnetic radiation and responding to the incident electromagnetic radiation by an acoustic and/or ultrasonic signal;
b) an electro-acoustic transducer being coupled to the graphene sponge and receiving the acoustic and/or ultrasonic signal and outputting in response to the acoustic and/or ultrasonic signal an electric signal; and
c) an evaluation unit being enable to detect the course of the intensity of the electric signal.

2. An apparatus for converting incident acoustic and/or ultrasonic waves into electromagnetic radiation, comprising:
a) a 3D graphene structure comprising a number of graphene sheets for receiving the incident acoustic and/or ultrasonic waves and responding to the incident acoustic and/or ultrasonic waves by electromagnetic radiation; and
b) an electro-acoustic transducer being coupled to the 3D graphene structure outputting the acoustic and/or ultrasonic waves.

3. A method for converting incident electromagnetic radiation into acoustic and/or ultrasonic waves, comprising the steps of:
a) providing a 3D graphene structure comprising a number of graphene sheets for receiving the incident electromagnetic radiation and responding to the incident electromagnetic radiation by an acoustic and/or ultrasonic signal;
b) providing an electro-acoustic transducer being coupled to the 3D graphene structure and receiving the acoustic and/or ultrasonic signal and outputting in response to the acoustic and/or ultrasonic signal an electric signal;
c) providing an evaluation unit being enable to detect the course of the intensity of the electric signal; and
d) irradiating the 3D graphene structure with the electromagnetic radiation.

4. A method for converting incident acoustic and/or ultrasonic waves into electromagnetic radiation, comprising:
a) providing a 3D graphene structure comprising a number of graphene sheets for receiving the incident acoustic and/or ultrasonic waves and responding to the incident acoustic and/or ultrasonic waves by electromagnetic radiation; and
b) providing an electro-acoustic transducer being coupled to the 3D graphene structure outputting the acoustic and/or ultrasonic waves; and
c) irradiating the 3D graphene structure with the acoustic and/or ultrasonic waves.

5. Use of an apparatus and/or a method according any of the claims 1 to 4 for demodulation to baseband and transmission of signal over carriers at frequencies difficult to access ranging continuously from hundreds of MHz to hundreds of THz.

6. Use of an apparatus and/or a method according any of the claims 1 to 4 for sound-emitting or thermal detectors sensitive over the frequencies range from hundreds of MHz to hundreds of THz.

7. Use of an apparatus and/or a method according any of the claims 1 to 4 for wireless high-fidelity loudspeakers driven by properly modulated microwaves or an optical source, such as LED or lasers.

8. Based on the claims 1-4, an application of the present invention for high-efficiency, high-temperature and contactless heater using sunlight or laser or microwaves electromagnetic sources.
